# EUROPÄISCHE PATENTSCHRIFT

(11) **EP 2 126 536 B1**
(45) Veröffentlichungstag und Bekanntmachung des Hinweises auf die Patenterteilung: **16.01.2019**
(21) Anmeldenummer: 08707142.9
(22) Anmeldetag: 21.01.2008
(51) Int. Cl.: G01L 5/28

(54) **VORRICHTUNG UND VERFAHREN FÜR EINEN FUNKTIONSTEST EINER BREMSE**
DEVICE AND METHOD FOR A FUNCTIONAL TEST OF A BRAKE
DISPOSITIF ET PROCÉDÉ POUR UN TEST DE FONCTIONNEMENT D'UN FREIN

(30) Priorität: 01.02.2007 DE 102007005827
(43) Veröffentlichungstag der Anmeldung: 02.12.2009
(73) Patentinhaber: SEW-EURODRIVE GmbH & Co. KG, 76646 Bruchsal (DE)
(72) Erfinder: JÄGER, Oliver, 67149 Meckenheim (DE)
(74) Vertreter: Tüngler, Eberhard
(86) Internationale Anmeldenummer: PCT/EP2008/000409
(87) Internationale Veröffentlichungsnummer: WO 2008/092581

(56) Entgegenhaltungen:
- EP-A- 0 924 583
- EP-A- 1 354 694
- EP-A- 1 710 549
- DE-A1- 19 941 121
- US-A- 5 343 134

## Beschreibung

Die Erfindung betrifft ein Verfahren und eine Vorrichtung zum Funktionstest einer Bremse.

Die Sicherheit von Anlagen ist in den letzten Jahren ein immer wichtigerer Aspekt im Maschinenbau geworden. Nicht zuletzt durch die von der europäischen Union regelmäßig aktualisierten Maschinenrichtlinien, werden ganz klar definierte Vorgaben für die Handhabung von Maschinen gemacht. Insbesondere besteht eine Gefahr durch herabsinkende Lasten bei vertikalen Verfahrwegen, wenn die Mechanik nicht selbsthemmend ausgebildet ist.

Aus der DE 103 05 434 B4 ist eine Bremse bekannt, die zur Sicherung vertikal beweglicher Lasten eine rein mechanische, etwa durch Fliehkraft geregelte Bremse vorsieht. Die Last muss hierfür jedoch mit einer Mindestgeschwindigkeit sinken, damit die Bremse aktiv wird.

Für die einzelne Maschinenkomponente gibt es die Möglichkeit, mit mehreren Bremsen ein redundantes System zu schaffen, das bei Ausfall einer Bremse auf eine zusätzliche Bremse zurückgreifen kann, sodass eine aufwendige Fangeinrichtung nicht mehr notwendig ist. Ein so ausgestatteter Antrieb, wie er zum Beispiel in der US 7 073641 B2 beschrieben wird, ermöglicht einen sicheren Halt des Antriebs, auch wenn eine Bremse nicht funktioniert.

Das Ausstatten eines Antriebs mit zwei unabhängigen Bremsen ist jedoch sehr aufwendig. Zum einen benötigt ein solcher Antrieb zusätzlichen Bauraum, der häufig nicht in der Anlage vorhanden ist. Des weiteren besteht, bedingt durch die redundante Schaltung der beiden Bremsen, ein erhöhter Verdrahtungs- und Regelungsaufwand.

Ein oftmals unterbewerteter Aspekt ist der, dass sämtliche Komponenten des Antriebs in einer größeren Baugröße gewählt werden müssen, da durch die zweite Bremse bedingt ein zusätzliches Trägheitsmoment des Gesamtantriebs bewegt werden muss. Neben größeren Motoren und Bremsen sind entsprechend auch größere Frequenzumrichter, mit erhöhtem Energiebedarf notwendig, wenn eine sichere Haltefunktion/Bremse realisiert werden soll. Aus der DE 10 2005 015 608 A1 ist ein Verfahren zum Prüfen der Bremse eines Roboters bekannt, die als Einkreisbremse ausgeführt ist. Das gezeigte Verfahren testet die maximale Haltekraft der Bremse und ist nicht für schwebende Lasten vorgesehen. Insbesondere ist die Bremse als Haltebremse einsetzbar.

**Aus der** EP 0 924 583 A **ist als nächstliegender Stand der Technik ein Verfahren zur Überprüfung von Motorbremsen bekannt.**

**Aus der** US 5 343 134 A **ist ein Verfahren zur Bremsenprüfung beim Bewegen des zugehörigen Antriebs bekannt, also ein dynamisches Prüfen.**

**Aus der** EP 1 710 549 A3 **ist ein Verfahren zum Prüfen der Bremse eines Motors eines Roboters bekannt.**

**Aus der** DE 199 41 121 A1 **ist eine Haltebremsenverschleißüberwachung bekannt.**

**Aus der** EP 1 354 694 A **ist ein Verfahren zum überwachen einer Bremse an einer Spindel bekannt.**

Der Erfindung liegt daher die Aufgabe zugrunde, die Sicherheit bei Anlagen mit Bremsmotoren zu erhöhen, insbesondere kostengünstig und energiesparend.

Erfindungsgemäß wird die Aufgabe bei dem Verfahren nach den in Anspruch 1 und bei der Vorrichtung nach den in Anspruch 13 angegebenen Merkmalen gelöst. Wichtige Merkmal des Verfahrens zum Funktionstest einer Bremse eines eine Last antreibenden Motors, wobei dem jeweiligen Betriebszustand des Motors ein Wert einer Basiskenngröße zuordenbar ist, ist in einem ersten Schritt die Bestimmung eines ersten Wertes der Basiskenngröße, wobei der Motor bei Vorliegen dieses ersten Wertes der Basiskenngröße die Last gegen die Schwerkraft hält, in einem zweiten Schritt das zum Einfallen bringen der Bremse bei einer ersten Position des Motors, in einem dritten Schritt die Vorgabe eines zweiten Wertes der Basiskenngröße an den Motor, sodass der Motor gegen die eingefallene Bremse wirkt, in einem vierten Schritt die Bestimmung der Position des Motors als zweite Position nach Anlegen des zweiten Wertes und der Vergleich mit der ersten Position.

Von Vorteil ist dabei, dass zum Funktionstest der Bremse nur ein einzelner Wert einer Basiskenngröße zu ermitteln ist. Durch diesen Wert ist der Aufwand des Motors zum Halten der Last beschreibbar. Anhand dieses Wertes ist in nachfolgenden Schritten das Haltevermögen der eingefallenen Bremse bestimmbar.
Ein weiterer Vorteil ist, dass der ermittelte Wert der Basiskenngröße als erster Wert verwendbar ist und ein von diesem ersten Wert abhängiger zweiter Wert zum Funktionstest vorgebbar ist. Beide Werte sind nicht absolut zu bestimmen, da der zweite Wert ein fest vorgegebenes Mehrfaches des ersten Wertes ist.
Von Vorteil ist außerdem, dass bereits vorhandene Komponenten des Motors für das Verfahren nutzbar sind. So sind sowohl Absolutwertgeber, die zur Positionsbestimmung vorgesehen sind, genauso zum Einsatz für das Prüfverfahren verwendbar, wie auch Sensoren, die zur Bestimmung der relativen Motorpositionsänderung vorsehbar sind. Durch Vergleich der Motorposition vor und nach dem Funktionstests ist das Funktionstestergebnis einfach bestimmbar.

Bei einer vorteilhaften Ausführungsform ist das Verfahren auf einen linearen oder rotatorischen Motor anwendbar. Des weiteren ist der Motor elektrisch, pneumatisch, hydraulisch oder als Verbrennungsmotor betreibbar.

Von Vorteil ist dabei, dass das Verfahren für unterschiedliche Antriebskonzepte anwendbar ist.

Bei einer vorteilhaften Ausführungsform ist die Bremse eine Haltebremse.

Von Vorteil ist dabei, dass das Verfahren bei einer technisch einfachen, kostengünstigen Haltebremse durchführbar ist.

Bei einer vorteilhaften Ausführungsform ist die Bremse eine Einkreisbremse.

Von Vorteil ist dabei, dass die Einkreisbremse wenig Bauraum benötigt, dem Gesamtantrieb nur geringe Trägheit beisteuert, einfache Verdrahtung notwendig ist und der Steuerungsaufwand gering ist.

Bei einer vorteilhaften Ausführungsform ist die Basiskenngröße ein Motorstrom, ein Fluss, eine Gleichspannung, eine Magnetisierung, einen Fluiddruck, ein Drehmoment oder eine ähnliche Zustandsgröße.

Von Vorteil ist dabei, dass das Verfahren bei unterschiedlichen Antriebskonzepten mit der jeweils am einfachsten erfassbaren Basiskenngröße durchführbar ist.
Ein weiterer Vorteil ist dabei, dass eine direkt messbare Größe verwendet wird. Die Messvorrichtung hierfür liefert einen zuverlässigen Wert, der reproduzierbar ist. Im Gegensatz zu einer Bestimmung des Motormoments ist dieser Wert auch unabhängig von Maschinendaten.

So brauchen verschiedene Einflussfaktoren nicht berücksichtigt zu werden. Beispielsweise gilt für einen Elektromotor:
- Beliebige Umrichter können verwendet werden
- Alterung oder Fertigungsstreuung haben keinen Einfluss auf den erfindungsgemäßen Funktionstest.
- Die Leistungsklasse des Umrichters hat keinen Einfluss auf den erfindungsgemäßen Funktionstest.
- Das Verfahren kann für synchron und asynchron Motoren verwendet werden
- Fertigungsstreuung oder Alterung des Motors hat keinen Einfluss auf den erfindungsgemäßen Funktionstest.
- Bei Permanentmagnetmotoren hat die Alterung der Magnete keinen Einfluss auf den erfindungsgemäßen Funktionstest.

Dies ist nur dadurch erreichbar, dass der erste Wert der Basiskenngröße, beispielsweise also der Motorstrom I₀, vor jedem Funktionstest neu bestimmt wird und als Referenzwert für den Funktionstest verwendet wird.

Durch dieses Verfahren sind Drifts einzelner Kenngrößen des Antriebs, die durch Alterung und/oder Umweltbedingungen bedingt sind in vorteilhafter Weise vermeidbar.

Bei einer vorteilhaften Ausführungsform ist der zweite Wert der Basiskenngröße derart bestimmbar, dass er ein Mehrfaches des ersten Wertes der Basiskenngröße beträgt.

Von Vorteil dabei ist, dass das Haltevermögen der Bremse in aufeinanderfolgenden einzelnen Abschnitten bestimmbar ist und das Haltevermögen der Bremse entsprechend der Sicherheitsvorgaben prüfbar ist.

Laut Erfindung ist der zweite Wert der Basiskenngröße derart bestimmbar, dass die Wirkung des Motors in entgegengesetzter Richtung zur Wirkung des Motors bei Vorsehen des ersten Wertes gerichtet ist.

Von Vorteil ist dabei, dass das vom Motor erzeugte Moment die gleiche Richtung hat wie das von der Last erzeugte.

Bei einer vorteilhaften Ausführungsform ist der erste Wert der Basiskenngröße für einen einzelnen Funktionstest speicherbar.

Von Vorteil ist dabei, dass der Wert als Referenzwert für genau diesen einzelnen Bremsenfunktionstest wiederverwendbar ist.

Bei einer vorteilhaften Ausführungsform ist die Ermittlung des ersten Wertes der Basiskenngröße unabhängig von der Veränderung der Anlage zwischen zwei zeitlich voneinander beabstandeten Funktionstests, insbesondere unabhängig von durch Alterung bedingten Veränderungen. Des weiteren ist der erste Wert unabhängig sind von spezifischen Eigenschaften der zu prüfenden Anordnung.

Von Vorteil ist dabei, dass gerätebedingte Einflüsse bei einem Bremsenfunktionstest vernachlässigbar sind, da immer nur der erste Wert der Basiskenngröße zu bestimmen ist, welcher als Referenzwert während des Funktionstests gültig ist. Weiterer Vorteil ist dabei, dass bei wechselnder Last immer nur die aktuelle tatsächliche Last berücksichtigt wird und die Bremse somit für diese Anforderungen sicher prüfbar ist.

Bei einer vorteilhaften Ausführungsform ist der aus drittem und viertem Schritt gebildete Abschnitt des Funktionstests zweifach oder mehrfach hintereinander ausführbar.

Von Vorteil ist dabei, dass der Funktionstest mit unterschiedlichen zweiten Werten der Basiskenngröße durchführbar ist.

Laut Erfindung weist der Funktionstest mehrere Abschnitte auf, wobei der zweite Wert der Basiskenngröße jedes dieser Abschnitte veränderbar ist, wodurch die unterschiedlichen Sicherheitsstufen bei dem Motor mit der Bremse repräsentierbar sind. Des weiteren ist die Veränderung monoton steigend.

Von Vorteil ist dabei, dass die Belastbarkeit der Bremse in diskreten Stufen messbar ist und dass durch verschiedene Überhöhungen des dem Mindestbremsmoment entsprechenden, vom Motor erzeugte Moment verschiedene Aktionen durch die übergeordnete Steuerung auslösbar sind.

Laut Erfindung gilt der Funktionstest als bestanden, wenn die Position des Motors bei Abschluss des Funktionstests die erste Position ist und wenn die Position des Motors während aller Abschnitte unverändert bleibt.

Von Vorteil ist dabei, dass die Belastbarkeit der Bremse im Einsatz prüfbar ist.

Bei einer vorteilhaften Ausführungsform ist das Funktionstestergebnis an eine übergeordnete Steuerung übermittelbar.

Von Vorteil ist dabei, dass die Funktionstestergebnisse im Programmablauf der übergeordneten Steuereinheit berücksichtigbar sind und somit die Sicherheit verbesserbar ist. Des weiteren ist die Planbarkeit der Bremsenwartung verbesserbar.

Bei einer vorteilhaften Ausführungsform ist bei Nichtbestehen zumindest eines Abschnitts eine Aktion auslösbar, wobei die Aktion bei Nichtbestehen eines Funktionstestabschnitts ein Abschalten, Notaus oder Stopp einer Anlage ist.

Von Vorteil ist dabei, dass ein sicherheitstechnisch wichtiges Funktionstestergebnis direkt im Anschluss an den Funktionstest auswertbar ist und eine Gefahr für Mensch und Maschine vermeidbar ist.

Laut Erfindung wird der Motor von einer den Motor speisenden Vorrichtung versorgt, die den Wert der Basiskenngröße bestimmbar macht und regelt Von Vorteil ist dabei, dass das Mittel zum Bestimmen des Wertes der Basiskenngröße in einer Vorrichtung sowohl zur Bestimmung als auch zur Steuerung des Wertes der Basiskenngröße verwendbar ist.

Weitere Vorteile ergeben sich aus den abhängigen Ansprüche.

Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:

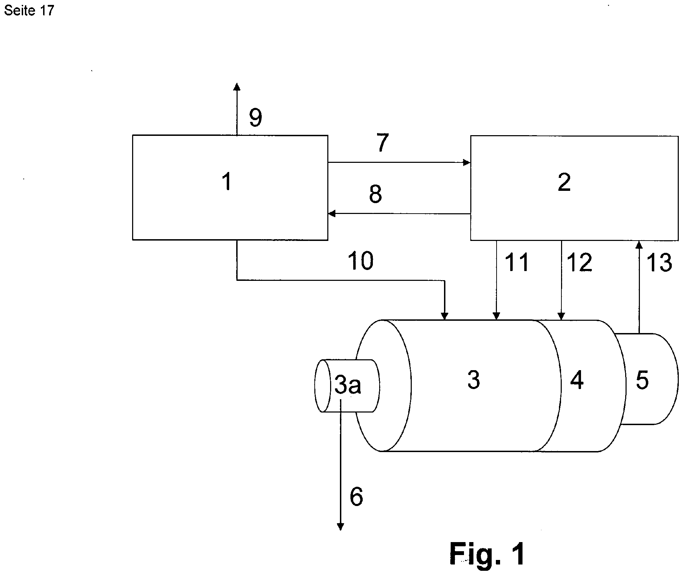

In der Figur 1 ist exemplarisch ein schematischer Aufbau eines Elektroantriebs und der zugehörigen Komponenten für eine sichere Einkreisbremse dargestellt.

Ein Elektroantrieb, der in einer Servo-Applikation zu Einsatz kommt, umfasst einen Elektromotor 3 mit einer Abtriebswelle 3a. Mit der Rotorwelle des Elektromotors 3 verbunden ist eine Bremse 4 und ein Winkelsensor 5. An der Abtriebswelle 3a befindet sich eine Last 6. Der Elektromotor 3 wird über einen Frequenzumrichter 2 angesteuert, aus dem er über die Leistungsversorgung 11 versorgbar ist. Der Frequenzumrichter 2 übernimmt auch die Bremsenansteuerung 12 und verfügt über einen Eingang für die Positionsrückmeldung 13 eines Winkelsensors 5, wobei darüber die Sensorsignale dem Frequenzumrichter 2 zugeführt werden. Eine Verbindung des Frequenzumrichters 2 mit einer übergeordneten Anlagensteuerung 1 ermöglicht den Austausch von Informationen, wie beispielsweise Anfragen 7 und Rückmeldungen 8. Als Schnittstelle zum Anwender verfügt die Anlagensteuerung 1 über eine Anzeige 9, mit deren Hilfe Funktionstestergebnisse dargestellt werden. Die direkte Schnittstelle zwischen der Anlagensteuerung 1 und dem Elektromotor 3 bildet die Verbindung zum Auslösen eines Notaus 10.

Zur Durchführung des erfindungsgemäßen Funktionstests der Bremse 4 werden die notwendigen Randbedingungen durch die übergeordnete Anlagensteuerung 1 vorbereitet. Die Last 6 muss hierfür in eine sichere Position gebracht werden, die auch als erste Position bezeichnet wird. Wesentlich hierfür ist, dass ein Funktionstest in dieser sicheren Position keine Gefahr für Mensch und Maschine darstellen darf, da vor Beginn des Funktionstests davon ausgegangen werden muss, dass der Funktionstest nicht bestanden werden könnte. Nach Erreichen dieser Position, wird eine Funktionstestanfrage 7 an den Frequenzumrichter 2 gestellt. Das Programm zur Durchführung des Funktionstests der Bremse 4 wird vom Frequenzumrichter 2 aus abgearbeitet.

Da die Bremswirkung im Bezug auf die aktuelle Last 6 getestet werden soll, muss die Wirkung der Last 6 als Referenzwert ermittelt werden. Der Frequenzumrichter 2 regelt den Motorstrom I₀ über die Leistungsversorgung 11 derart, dass die Last 6 beim Öffnen der Bremse 4 nach Abschluss des Funktionstests unbewegt bleibt, dass sich die Abtriebswelle 3a des Elektromotors 3 also nicht bewegt, was vom Winkelsensor 5 durch die Positionsrückmeldung 13 an den Frequenzumrichter 2 rückgemeldet wird.

Der für das Halten der Last 6 an einer festen Position notwendige Wert des Motorstroms I₀ wird im Frequenzumrichter 2 abgespeichert. Für den erfindungsgemäßen Funktionstest der Bremse 4 wird nun angenommen, dass angelegte Motorströme proportional zum an der Abtriebswelle 3a anliegenden Moment sind und zwar unabhängig von der Bewegungsrichtung des Elektromotors 3. Ein Proportionalitätsfaktor, der notwendig wäre um aus dem Stromwert I₀ ein Moment zu bestimmen, ist für den weiteren Funktionstest nicht notwendig, da bei dem erfindungsgemäßen Verfahren ausschließlich Stromwerte vorgegeben werden. Für den weiteren Verlauf des Funktionstests genügt es, den Stromwert I₀ zu kennen, der notwendig ist, um das durch die Last 6 bewirkte Moment gerade auszugleichen.

Über die Bremsenansteuerung 12 wird anschließend die Bremse 4 ausgelöst, sodass nach Einfallen der Bremse 4 der Elektromotor 3 festgehalten ist.

Wird der Motorstrom I₀ abgeschaltet, so wirkt auf die Bremse 4 das durch die Last 6 aufgebrachte Moment.

Die Funktion der Bremse 4 kann durch den erfindungsgemäßen Funktionstest in verschiedene Abschnitte unterteilt werden. Das Ziel des Funktionstests der Bremse 4 soll sein, das notwendige Haltemoment der Bremse 4 in Abhängigkeit von der Last 6 zu bestätigen. Zur Überprüfung der Bremse 4 wird der Elektromotor 3 in Lastrichtung mit einem Motorstrom I₁ als erster Wert beaufschlagt, der ein Mehrfaches des gemessenen Haltestroms I₀ sein sollte und in Gegenrichtung läuft. Diese erste Schwelle I₁ dient der Überprüfung der Mindestanforderung, die man an die Bremse 4 stellt. Neben dem alleinigen Halten der Last 6 soll die Bremse 4 noch eine Reserve in ihrem maximalen Haltemoment haben. Der hierbei gewünschte Faktor ist vom Anwender entsprechend seiner Sicherheitsvorgaben auszuwählen.

Die Differenz der beiden angelegten Motorströme I₀ und I₁ ist größer als der bei der Strommessung zu berücksichtigende Messfehler ΔI, insbesondere also I₁-I₀ >> ΔI gilt. Werden bei dieser Erhöhung des Motorstroms Veränderungen der Motorwellenlage registriert, so gilt die Bremse 4 als nicht mehr sicher. Dieses Ergebnis wird vom Frequenzumrichter 2 an die übergeordnete Anlagensteuerung 1 als Rückmeldung 8 übermittelt. Die Anlagensteuerung 1 reagiert hierauf beispielsweise mit einem Notaus-Befehl 10, den sie direkt an den Elektromotor 3 weitergibt. Das System kann in der sicheren Position stehen bleiben, bis das sichere Bremsmoment wieder gewährleistet ist, das heißt, bis die Bremse 4 gewartet wurde.

Alternativ zum Notaus wird die Bremse geöffnet und die Last auf eine andere sichere Position gefahren, beispielsweise auf den Boden.

Werden bei genannter Erhöhung des Motorstroms keine Veränderungen der Motorwellenlage registriert, so wird der Funktionstest fortgesetzt:
Im nächsten Schritt des Funktionstests der Bremse 4 wird der Motorstrom auf einen zweiten Wert I₂ weiter erhöht. Dieser Stromwert I₂ steht für das Moment, das im Normalbetrieb von der Bremse 4 gefordert wird. Die Bremse 4 sollte dieses Moment halten können um im Betrieb als sicher eingestuft zu werden. Im Funktionstest wird weiterhin fortlaufend der Winkelsensor 5 vom Frequenzumrichter 2 ausgelesen.

Wird in diesem Abschnitt des Funktionstests eine Veränderung der Lage der Abtriebswelle 3a registriert, so meldet der Frequenzumrichter 2 dies an die Anlagensteuerung 1, die ihrerseits eine Anzeige 9 des Funktionstestergebnisses aktiviert. Die bald notwendige Überprüfung der Bremse 4 ist der Anlage somit mitgeteilt und kann innerhalb eines allgemeinen Wartungstermins durchgeführt werden.

Hat sich die Lage der Abtriebswelle 3a während des gesamten Funktionstests der Bremse 4 nicht verändert, so ist der Funktionstest der Bremse 4 bestanden, die Bremse 4 befindet sich im Betriebszustand. Dies wird der Anlagensteuerung 1 ebenfalls vom Frequenzumrichter 2 mitgeteilt. Die Anlage kann im Normalbetrieb weiterbetrieben werden.

Bei weiteren vorteilhaften Ausführungsformen ist die erfindungsgemäße Bremse 4 in einer Hebevorrichtung vorgesehen, insbesondere mit einer schiefen Ebene oder vertikal.

Bei weiteren vorteilhaften Ausführungsformen sind auch mehrere Abschnitte mit weiter unterschiedlichen zweiten Werten vorgesehen.

### Bezugszeichenliste

1 Anlagensteuerung
2 Frequenzumrichter
3 Elektromotor 3 a Abtriebswelle
4 Bremse
5 Winkelsensor
6 Last
7 Anfrage
8 Rückmeldung
9 Anzeige
10 Notaus
11 Leistungsversorgung
12 Bremsenansteuerung
13 Positionsrückmeldung

## Patentansprüche

1. Verfahren zum Funktionstest einer Bremse (4) eines eine Last antreibenden Motors,
wobei dem jeweiligen Betriebszustand des Motors ein Wert einer Basiskenngröße zugeordnet ist,
wobei in einem ersten Schritt ein erster Wert der Basiskenngröße bestimmt wird, wobei der Motor bei Vorliegen dieses ersten Wertes der Basiskenngröße die Last gegen die Schwerkraft hält,
in einem zweiten Schritt die Bremse (4) bei einer ersten Position des Motors zum Einfallen gebracht wird,
in einem dritten Schritt ein zweiter Wert der Basiskenngröße dem Motor vorgegeben wird, sodass der Motor gegen die eingefallene Bremse (4) wirkt,
in einem vierten Schritt die Position des Motors als zweite Position nach Anlegen des zweiten Wertes bestimmt wird und mit der ersten Position verglichen wird,
**dadurch gekennzeichnet, dass**
die Basiskenngröße ein Motorstrom, ein Fluss, eine Gleichspannung, eine Magnetisierung, einen Fluiddruck, ein Drehmoment oder eine ähnliche Zustandsgröße ist,
wobei der zweite Wert der Basiskenngröße derart bestimmt wird, dass er ein Mehrfaches des ersten Wertes der Basiskenngröße beträgt,
wobei der zweite Wert der Basiskenngröße derart bestimmt wird, dass die Wirkung j des Motors in entgegengesetzter Richtung zur Wirkung des Motors bei Vorsehen des ersten Wertes gerichtet ist,
wobei der Funktionstest mehrere Abschnitte aufweist, wobei der zweite Wert der Basiskenngröße jedes dieser Abschnitte verändert wird, wodurch die unterschiedlichen Sicherheitsstufen bei dem Motor mit der Bremse (4) repräsentiert sind,
wobei die Veränderung betragsmäßig monoton steigend ist,
wobei der Funktionstest als bestanden gilt, wenn die Position des Motors bei Abschluss des Funktionstests die erste Position ist und wenn die Position des Motors während aller Abschnitte unverändert bleibt,
wobei der Motor von einer den Motor speisenden Vorrichtung versorgt wird, die den Wert der Basiskenngröße regelt.

2. Verfahren nach Anspruch 1,
**dadurch gekennzeichnet, dass**
der Motor ein linearer oder ein rotatorischer Motor ist.

3. Verfahren nach einem der vorangegangenen Ansprüche,
**dadurch gekennzeichnet, dass**
der Motor elektrisch, pneumatisch, hydraulisch oder als Verbrennungsmotor betrieben wird.

4. Verfahren nach einem der vorangegangenen Ansprüche,
**dadurch gekennzeichnet, dass**
die Bremse (4) eine Haltebremse ist.

5. Verfahren nach einem der vorangegangenen Ansprüche,
**dadurch gekennzeichnet, dass**
die Bremse (4) eine Einkreisbremse ist.

6. Verfahren nach einem der vorangegangenen Ansprüche,
**dadurch gekennzeichnet, dass**
der erste Wert der Basiskenngröße für einen einzelnen Funktionstest gespeichert wird.

7. Verfahren nach einem der vorangegangenen Ansprüche,
**dadurch gekennzeichnet, dass**
die Ermittlung des ersten Wertes der Basiskenngröße unabhängig von der Veränderung der Anlage zwischen zwei zeitlich voneinander beabstandeten Funktionstests ist, insbesondere unabhängig von durch Alterung bedingten Veränderungen.

8. Verfahren nach einem der vorangegangenen Ansprüche,
**dadurch gekennzeichnet, dass**
die beim Funktionstest vorgegebenen Werte der Basiskenngrößen unabhängig sind von spezifischen Eigenschaften der zu prüfenden Anordnung, insbesondere Alterung.

9. Verfahren nach einem der vorangegangenen Ansprüche,
**dadurch gekennzeichnet, dass**
der aus 3. und 4. Schritt gebildete Abschnitt des Funktionstests zweifach oder mehrfach hintereinander ausgeführt wird.

10. Verfahren nach einem der vorangegangenen Ansprüche,
**dadurch gekennzeichnet, dass**
das Funktionstestergebnis an eine übergeordnete Steuerung gemeldet wird.

11. Verfahren nach einem der vorangegangenen Ansprüche,
**dadurch gekennzeichnet, dass**
bei Nichtbestehen zumindest eines Abschnitts eine Aktion ausgelöst wird.

12. Verfahren nach einem der vorangegangenen Ansprüche,
**dadurch gekennzeichnet, dass**
die Aktion bei Nichtbestehen eines Funktionstestabschnitts zu einem Abschalten, Notaus oder Stopp einer Anlage führt.

13. Vorrichtung ausgelegt zur Durchführung eines Verfahrens nach einem der vorangegangenen Ansprüchen, die folgenden Mittel aufweisend:
- einen Elektromotor (3) mit einer Abtriebswelle (3a), die mit der Bremse (4) verbunden ist,
- einen Winkelsensor (5), der mit der Abtriebswelle (3a) verbunden ist,
- eine Last (6), die sich an der Abtriebswelle (3a) befindet,
- einen Frequenzumrichter (2), der ausgelegt ist den Elektromotor (3) und die Bremse (4) zu steuern und die Positionsrückmeldung des Winkelsensor (5) zu erfassen,
wobei die Bremse (4) elektromagnetisch betätigbar ist.

## Claims

1. A method for function testing of a brake (4) of a motor driving a load,
wherein a value of a basic characteristic is associated with the respective operating state of the motor,
wherein in a first step a first value of the basic characteristic is determined, wherein the motor if this first value of the basic characteristic is present holds the load counter to the force of gravity,
in a second step the brake (4) is applied at a first position of the motor,
in a third step a second value of the basic characteristic is specified to the motor, so that the motor acts counter to the applied brake (4),
in a fourth step the position of the motor is determined as second position after application of the second value and is compared with the first position,
**characterised in that**
the basic characteristic is a motor current, a flux, a DC voltage, a magnetisation, a fluid pressure, a torque or a similar state variable,
the second value of the basic characteristic being determined in such a way that it amounts to a multiple of the first value of the basic characteristic,
the second value of the basic characteristic being determined in such a way that the action of the motor is directed in the opposite direction to the action of the motor when providing the first value,
the function test having a plurality of parts, the second value of the basic characteristic of each of these parts being changed, as a result of which the different safety stages are represented in the motor with the brake (4),
the change increasing monotonically in terms of amount,
the function test being deemed to have been passed if the position of the motor at the conclusion of the function test is the first position and if the position of the motor remains unchanged during all the parts,
the motor being supplied from a device which feeds the motor, which controls the value of the basic characteristic.

2. A method according to Claim 1,
**characterised in that**
the motor is a linear or a rotary motor.

3. A method according to one of the preceding claims,
**characterised in that**
the motor is operated electrically, pneumatically, hydraulically or as an internal combustion engine.

4. A method according to one of the preceding claims,
**characterised in that**
the brake (4) is a holding brake.

5. A method according to one of the preceding claims,
**characterised in that**
the brake (4) is a single-circuit brake.

6. A method according to one of the preceding claims,
**characterised in that**
the first value of the basic characteristic is stored for an individual function test.

7. A method according to one of the preceding claims,
**characterised in that**
the ascertaining of the first value of the basic characteristic is independent of the change in the installation between two function tests which are at chronological intervals from each other, in particular independent of changes due to ageing.

8. A method according to one of the preceding claims,
**characterised in that**
the values of the basic characteristics specified in the function test are independent of specific properties of the arrangement to be tested, in particular ageing.

9. A method according to one of the preceding claims,
**characterised in that**
the part of the function test formed from the 3rd and 4th steps is carried out twice or several times in succession.

10. A method according to one of the preceding claims,
**characterised in that**
the result of the function test is notified to a higher-level control means.

11. A method according to one of the preceding claims,
**characterised in that**
if at least one part is not passed an action is triggered.

12. A method according to one of the preceding claims,
**characterised in that**
the action if a function test part is not passed leads to the switching-off, emergency stop or stopping of an installation.

13. A device designed for carrying out a method according to one of the preceding claims, having the following means:
- an electric motor (3) with an output shaft (3a) which is connected to the brake (4),
- an angle sensor (5) which is connected to the output shaft (3a),
- a load (6) which is located on the output shaft (3a),
- a frequency converter (2) which is designed to control the electric motor (3) and the brake (4) and to detect the position feedback means of the angle sensor (5),
wherein the brake (4) is electromagnetically actuatable.

## Revendications

1. Procédé pour le test de fonctionnement d'un frein (4) d'un moteur entraînant une charge,
sachant qu'une valeur d'un paramètre de base est associée à l'état de fonctionnement respectif du moteur,
sachant qu'au cours d'une première étape, on détermine une première valeur du paramètre de base, sachant que le moteur retient la charge à l'encontre de la force de gravité en présence de cette première valeur du paramètre de base,
qu'au cours d'une deuxième étape, on amène le frein (4) à s'engager à une première position du moteur,
qu'au cours d'une troisième étape, on prescrit une deuxième valeur du paramètre de base du moteur, de sorte que le moteur agit à l'encontre du frein engagé (4),
qu'au cours d'une quatrième étape, on détermine la position du moteur comme deuxième position à la suite de l'application de la deuxième valeur, et on la compare à la première position,
**caractérisé en ce que** le paramètre de base du moteur est un courant de moteur, un flux, une tension continue, une magnétisation, une pression de fluide, un couple ou une grandeur d'état analogue,
sachant que la deuxième valeur du paramètre de base est déterminée de telle sorte qu'elle est égale à un multiple de la première valeur du paramètre de base,
sachant que la deuxième valeur du paramètre de base est déterminée de telle sorte que l'action du moteur est dirigée dans le sens contraire à l'action du moteur lorsqu'on prévoit la première valeur,
sachant que le test de fonctionnement présente plusieurs parties, sachant que la deuxième valeur du paramètre de base de chacune de ces parties est modifiée, de sorte que les différents niveaux de sécurité pour le moteur sont représentés avec le frein (4), sachant que le montant de modification est croissant de manière monotone,
sachant que le test de fonctionnement est considéré comme réussi si la position du moteur à la fin du test de fonctionnement est la première position et si la position du moteur reste inchangée pendant toutes les parties,
sachant que le moteur est alimenté par un dispositif alimentant le moteur, dispositif qui régule la valeur du paramètre de base.

2. Procédé selon la revendication 1, **caractérisé en ce que** le moteur est un moteur linéaire ou un moteur rotatif.

3. Procédé selon l'une des revendications précédentes, **caractérisé en ce que** le moteur est exploité de manière électrique, pneumatique ou hydraulique, ou sous forme de moteur à combustion interne.

4. Procédé selon l'une des revendications précédentes, **caractérisé en ce que** le frein (4) est un frein d'arrêt.

5. Procédé selon l'une des revendications précédentes, **caractérisé en ce que** le frein (4) est un frein à circuit unique.

6. Procédé selon l'une des revendications précédentes, **caractérisé en ce que** la première valeur du paramètre de base est mémorisée pour un test de fonctionnement individuel.

7. Procédé selon l'une des revendications précédentes, **caractérisé en ce que** la détermination de la première valeur du paramètre de base est indépendante de la modification de l'installation entre deux tests de fonctionnement mutuellement espacés dans le temps, en particulier indépendante de modifications dues au vieillissement.

8. Procédé selon l'une des revendications précédentes, **caractérisé en ce que** les valeurs des paramètres de base qui sont prescrites lors du test de fonctionnement sont indépendantes de propriétés spécifiques de l'agencement à contrôler, en particulier du vieillissement.

9. Procédé selon l'une des revendications précédentes, **caractérisé en ce que** la partie du test de fonctionnement qui est constituée de la 3ème et de la 4ème étape est exécutée deux fois ou davantage successivement.

10. Procédé selon l'une des revendications précédentes, **caractérisé en ce que** le résultat du test de fonctionnement est signalé à une commande supérieure.

11. Procédé selon l'une des revendications précédentes, **caractérisé en ce qu'**une action est déclenchée en cas d'échec d'au moins une partie.

12. Procédé selon l'une des revendications précédentes, **caractérisé en ce que** l'action en cas d'échec d'une partie du test de fonctionnement conduit à désactiver, à arrêter en urgence ou à stopper une installation.

13. Dispositif conçu pour la mise en oeuvre d'un procédé selon l'une des revendications précédentes, qui présente les moyens suivants :
- un moteur électrique (3), avec un arbre de sortie (3a) qui est relié au frein (4),
- un capteur d'angle (5), qui est relié à l'arbre de sortie (3a),
- une charge (6), qui se trouve sur l'arbre de sortie (3a),
- un convertisseur de fréquence (2), qui est conçu pour commander le moteur électrique (3) et le frein (4) et pour recueillir le rétrosignal de position du capteur d'angle (5),
sachant que le frein (4) peut être actionné par voie électromagnétique.
